# EUROPEAN PATENT SPECIFICATION

(11) **EP 1 072 372 B1**
(45) Date of publication and mention of the grant of the patent: **18.12.2002**
(21) Application number: 00830180.6
(22) Date of filing: 13.03.2000
(51) Int. Cl.: B29C 33/36, B29C 41/46, B29C 41/04, B29C 41/34

(54) **Apparatus for the rotary moulding of plastic materials**
Vorrichtung zum Rotationsformen von Kunststoffen
Dispositif de rotomoulage de matières plastiques

(30) Priority: 21.07.1999 IT FI990097 U
(43) Date of publication of application: 31.01.2001
(73) Proprietor: Plastop S.A.S, 50040 Mercatale di Vernio (Prato) (IT); Bolognesi, Riccardo, 50040 Cantagallo (Prato) (IT)
(72) Inventor: Bolognesi, Riccardo, 50040 Cantagallo (Prato) (IT)
(74) Representative: Martini, Lazzaro

(56) References cited:
- EP-A- 0 208 432
- WO-A-96/38281
- WO-A-98/42487
- CH-A- 373 170
- FR-A- 2 659 047
- GB-A- 1 604 532
- US-A- 3 550 206
- US-A- 4 890 995

## Description

The present invention relates to an apparatus for the rotary moulding of plastic materials.

Such an apparatus is described in e.g. WO 98/42487, US 3550206 and US 4890995.

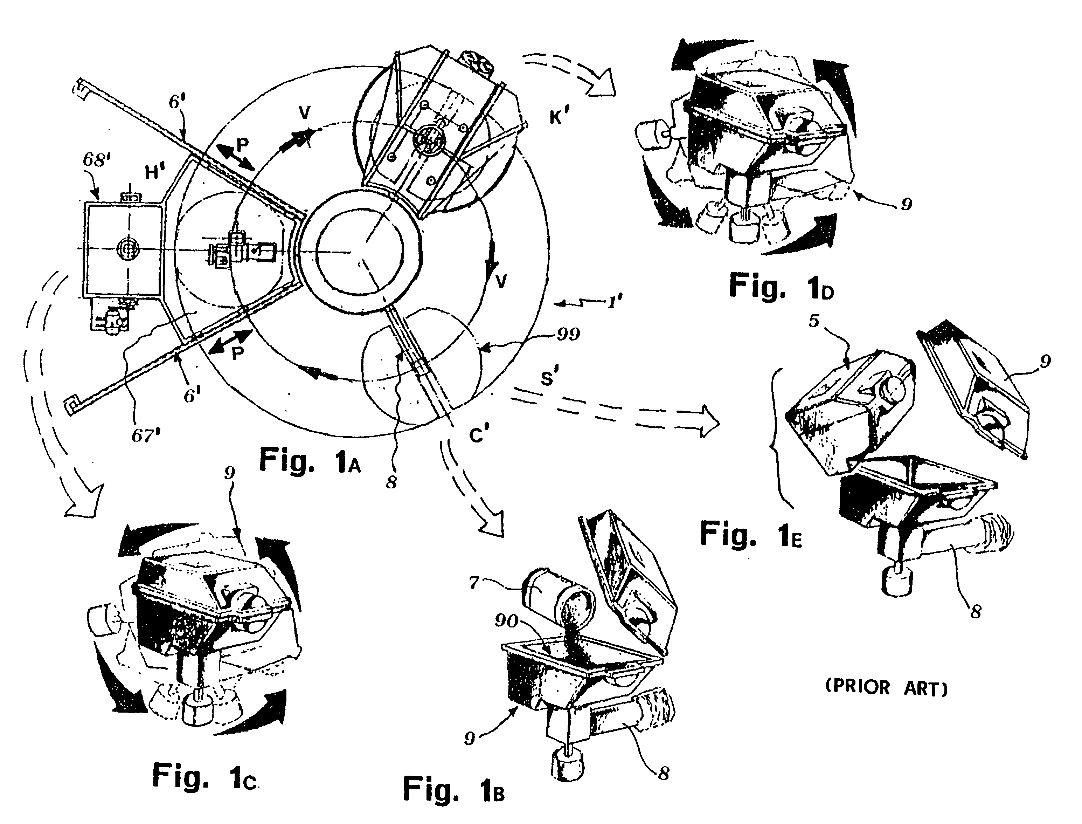

Figs. 1A-1E illustrate schematically an embodiment of a well-known type of machine, which provides a more detailed description of this apparatus. The apparatus generally used for rotary moulding consists of a carrousel machine (1')(which is schematically represented in a plan view in Fig.1A) featuring a series of supporting arms (8). The arms (8) are intended to support corresponding dies (9) which are moved along a given operating path; moreover, these arms are capable of moving the dies supported while they are rotating on themselves, that is around both orthogonal axes, one of which corresponds with that of the arm (8). In practice, the machine (1') is capable of moving the dies, which rotate on themselves, and of shifting them along a series of operating stations, in which corresponding production phases take place.

The operating path of the machine(which is circular, clockwise and marked with V in Fig.1A) foresees a loading station (C') in which a given amount of liquid or powdered plastic material (7) is introduced into the internal cavity (90) of the die (9). The die (9) is then closed and taken to a heating chamber (H') bounded by two mobile walls (6') which move radially (direction P in Fig.1A) with regard to the carrousel-structure, so that they can change their opening position, in which they allow the introduction of the arm (8) and of the supported die (9), into a closing position, which provides a heating chamber (67'). The heating chamber consists of a furnace equipped with a corresponding burner and hot air distributor (68') which heats the plastic material to a melting temperature; thanks to the rotation (schematically represented by the arrows around die 9), the plastic material uniformly deposits on the walls of the die. One or more further cooling stations can be found along the operationg path, which ends at an unloading station where the end-product is extracted from the die (9).

Figgs.1B-1E show one cooling station only (K') and the unloading station (S') corresponds with the loading station (C'). One of the main problems concerning the apparatus for the rotary moulding which is now being built, arises from the heating station; in fact, it has been demonstrated that this well-known apparatus requires a considerable amount of power or a relatively long heating time. A further inconvenience is connected with the distribution of service gas for the dies, which takes place completely through the (hollow) supporting shafts. This accomodation leads to extremely difficult working conditions during maintenance and repair. Moreover, under the above conditions, it is very difficult to detect possible anomalies in the ducts.

The main purpose of the present invention is to overcome the above inconveniences.
This result has been achieved, in accordance with the invention, by building an apparatus having the features described in claim 1. Further features are the subject of the dependent claims.

The main advantages of the present invention are connected with the possibility of reducing the amount of power required by the heating station, as well as the heating time; the heating chamber can be opened without encumbering considerably the external space around the machine; moreover, thanks to this invention, maintenance and repair can be carried out easily and quickly; the present apparatus is extremely easy to build; its features remain unchanged even after long working periods.

The technicians operating in this field will be able to understand the above mentioned advantages and features as well as further advantages and features of the present invention thanks to the enclosed drawings, which represent an embodiment of the invention, which, however, should not be considered as a limitation, wherein:
- Fig.1A shows a schematic plan view of a known apparatus;
- Figs. 1B, 1C, 1D and 1E show details of, respectively, the loading station, the heating station, the cooling station and th eunloading station of th eapparatus shown in Fig.1A;
- Fig.2 shows a schematic view of a possible embodiment of the present invention, seen in a plan view;
- Fig.3A shows a lateral view of the apparatus according to the invention, some parts of which have been removed.
- Fig.3B is an enlarged view of the group at the distal end of the arm shown in Fig.3A.

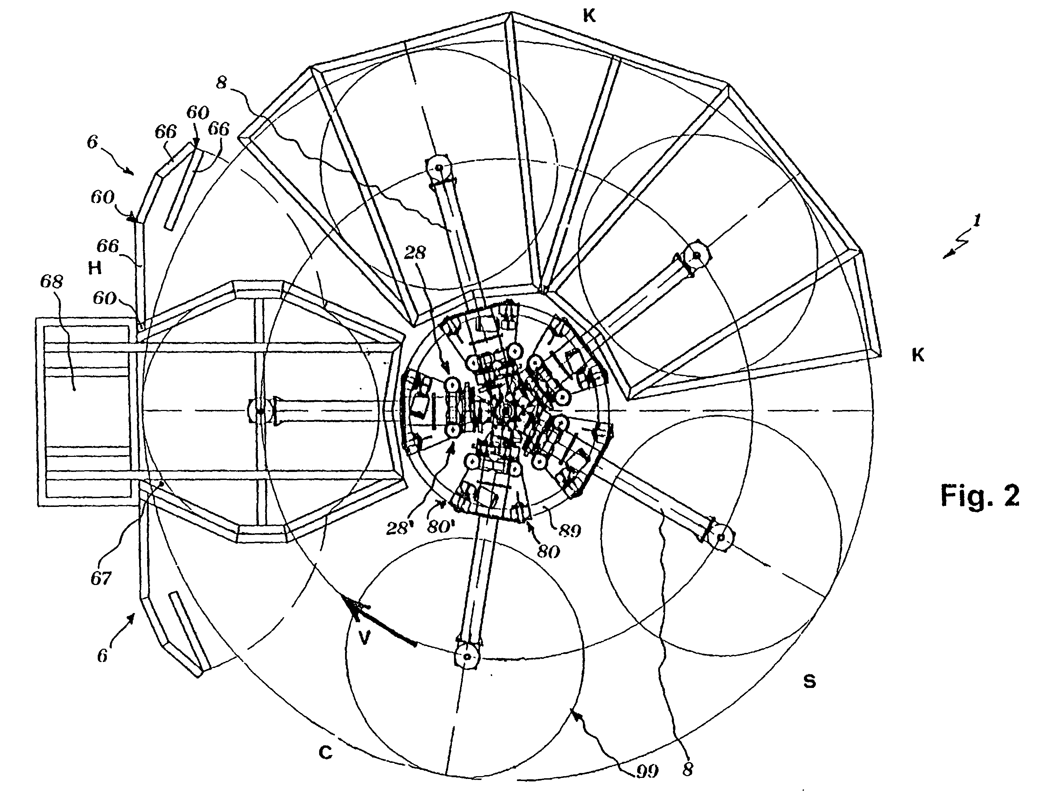

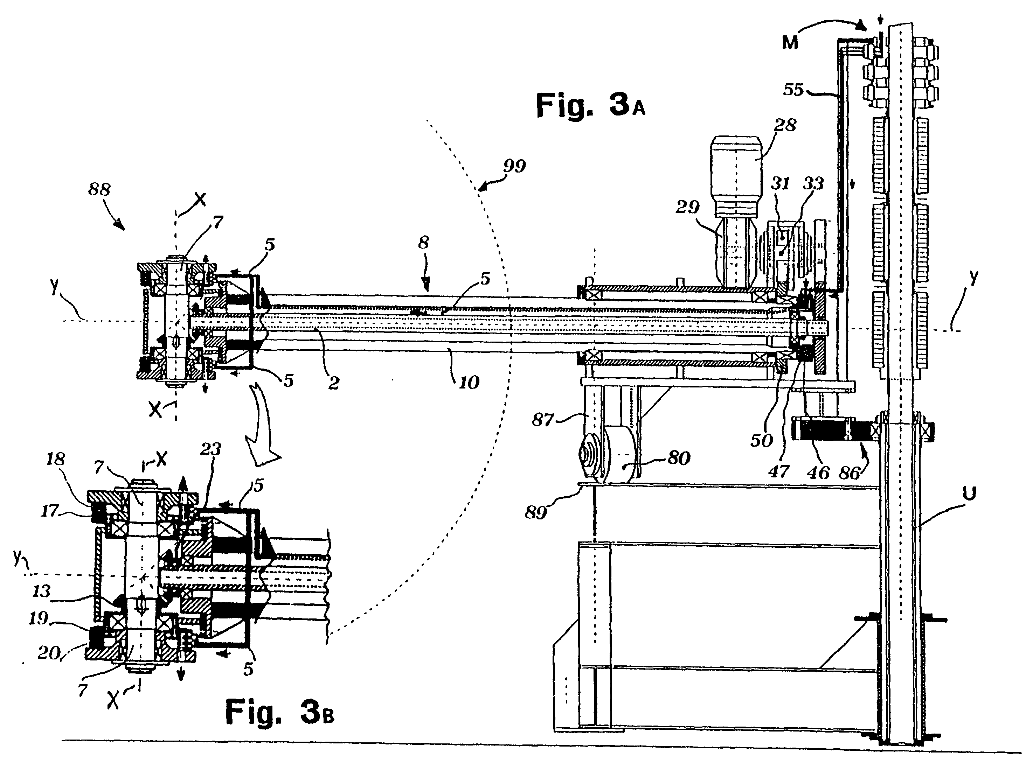

Seen in its essential structure, with reference to Figs.2, 3A and 3B, an apparatus (1) for the rotary moulding of plastic materials in accordance with the invention, consists of a horizontal carrousel structure for supporting dies (9) Said carrousel structure presents a series of arms (8) (five in the embodiment shown in Fig. 2) allowing the supported dies (9) to rotate around two orthogonal axes (the description of which can be found later), in which they occupy a corresponding rotative volume (99), which is basically spherical, so that they can be moved along an operating path (marked with direction V) consisting of a series of working stations. Motors (28) and (28') provide the motion of arm (8). Motors (28) provide the rotation around the longitudinal axis (y-y) of arms (8) by means of a reducer (29) fitted with an output shaft (33) on which a toothed wheel (31), meshed with a wheel (50) keyed on the external hollow shaft (10) of arm (8), is positioned. Group (88) is present at the distal end of arm (8). Motor (28') acts on the internal shaft (2) by means of a transmission which is analogous to the previous one. A conical wheel (23), which is meshed with a gear (13) keyed on shaft (7), is present at the distal end of the hollow shaft (2). Die (9) is associated with shaft (7). By means of the two transmissions described above (motor 28-shaft 10-group 88 and motor 28'- shaft 2-shaft 7-die 9 ) the die can be rotated around the axis x-x and around the axis y-y.
As regards the distribution of service gas, a rotary distributor (46,47) is foreseen at the end of arm (8), that is at the proximal end. The distributor (46, 47) is connected to a central distributor (M) by means of a duct (55) and, at the opposite end, to two distributors (17, 18) and (19, 20) (there are two distributors to allow the fixing of two opposite dies on the shaft (7)). The connection between the distributors at the proximal and distal ends takes place through ducts (5) which are partly arranged internally and placed between shaft (10) and shaft (2), and partly arranged externally. In practice, the final connection to the distributors (19, 20) and (17, 18) takes place outside the final transmission shaft (7). This feature offers great advantages in comparison with the usual method used when inspecting ducts or replacing seals, and so on, considering that these operations are carried out very often on account of the high temperatures present in the zone where the dies are positioned.
Each arm (8) is fitted on a circular track (89) by means of two wheels (80, 80') presented by corresponding clamps (87). Wheel (80) is idle, while wheel (80') is motorized. Moreover, each arm is supported by a central plate ( 86) hinged on the vertical shaft (U) of the carrousel-structure.

Similarly to conventional machines, the apparatus subject of the invention presents from upstream to downstream: a loading station (C ), a heating station or furnace (H), two cooling stations (K) and an unloading station (S).
The heating station is equipped with a burner and hot air distributor (68) and it is bounded by mobile walls (6) providing a heating chamber (67) for the dies (9). Thanks to their advantageous structure and accomodation, the mobile walls (6) can be closed so as to provide a heating chamber (67) the volume of which is similar to the aforesaid rotative volume (99), but slightly larger than this. In practice, at least two of the mobile walls (6) circumscribe the volume occupied by the dies, which is basically spherical (99). According to a series of experiments, it has been demonstrated that this particular geometry of the heating chamber (67) allows a reduction of 25% in the consumption of power.
In particular, the mobile walls (6) consist of a plurality of portions (66) hinged on two opposite sides of the chamber (67). Vertical hinges (60) are foreseen between the portions (66) so as to allow an opening with a partial overlapping of the portions (66). On the one hand, thanks to this feature the volume of the heating chamber (67) can be considerably reduced, on the other hand, the mobile walls (66) can be opened without encumbering considerably the space around the apparatus (1). In this way, the space occupied by the apparatus inside the works where it is installed is very limited. The walls are opened or closed by means of a PLC system, using pneumatic activators (which are not shown in the figures).

## Claims

1. Apparatus for the rotary moulding of plastic materials, consisting of a carrousel structure for supporting dies, in which the dies occupy a corresponding rotative volume, which structure allows the dies to rotate around one or more axes and to move along an operating path consisting of at least a heating chamber or furnace, bounded by walls providing a heating chamber for the dies, apparatus **characterised by** the fact that at least two of said walls (6) circumscribe the volume (99) occupied by the dies in the heating chamber (67).

2. Apparatus according to claim 1, **characterised by** the fact that said walls (6) are mobile between two configurations which can be steadly assumed, that is an opening position, in which the dies (9) can be introduced into the heating chamber (H) or removed from it, and a closing position, in which they provide said heating chamber (67), which presents a volume analogous to that of said rotative volume (99) but slightly larger than this.

3. Apparatus according to claim 1, **characterised by** the fact that said mobile walls (6) consist of a plurality of portions (66) hinged on on two opposite sides of said chamber (67).

4. Apparatus according to claim 3 **characterised by** the fact that said hinged portions (66) are connected to one another by means of vertical hinges (60), so that they can be opened and at least partially overlapped on one another.

5. Apparatus according to claim 1, where said carrousel structure consists of a plurality of supporting arms presenting a group for supporting the dies and for distributing service gas at one free end, apparatus **characterised by** the fact that said support and distribution group (88) is equipped with rotary distributors (19, 20; 17, 18) placed externally, that is directly accessible from the exterior.

6. Apparatus according to claim 1, where said carrousel structure consists of a plurality of supporting arms supporting the dies and for distributing service gasat one free end, apparatus **characterised by** the fact that connecting means for the distribution of service gas are foreseen between the central portion of the apparatus and said support and distribution group (6), said connecting means consisting of one or more ducts (5), arranged externally in relation to the final driven shaft (7) of said group (88).

## Patentansprüche

1. Vorrichtung für das Rotationsformen von Kunststoffmaterialien, die aus einer Karussellstruktur besteht, die zum Tragen von Formen dient, wobei die Formen ein entsprechendes Rotationsvolumen einnehmen und die Struktur es den Formen ermöglicht, um eine oder mehrere Achsen zu rotieren und sich längs eines Arbeitsweges zu bewegen, der zumindest aus einer Erhitzungskammer oder einem Ofen besteht, der von Wänden begrenzt ist. die eine Erhitzungskammer für die Formen bilden, **dadurch gekennzeichnet, daß** wenigstens zwei der Wände (6) das von den Formen in der Erhitzungskammer (67) eingenommene Volumen (99) umschreiben.

2. Vorrichtung nach Anspruch 1, **dadurch gekennzeichnet, daß** die Wände (6) zwischen zwei ständig einnehmbaren Konfigurationen bewegbar sind, nämlich einer ersten, die eine Öffnungsstellung bildet, in der die Formen (9) in die Erhitzungskammer (H) eingeführt oder aus ihr entnommen werden können, und einer zweiten, nämlich einer geschlossenen Position, in der sie die Erhitzungskammer (67) bilden, die ein Volumen besitzt, das dem besagten Rotationsvolumen (99) analog aber etwas größer als dieses ist.

3. Vorrichtung nach Anspruch 1, **dadurch gekennzeichnet, daß** die beweglichen Wände (6) aus einer Vielzähl von Teilen (66) bestehen, die an zwei einander gegenüberliegenden Seiten der Kammer (67) angelenkt sind.

4. Vorrichtung nach Anspruch 3, **dadurch gekennzeichnet, daß** die angelenkten Teile (66) miteinander durch vertikale Gelenke (60) verbunden sind, so daß sie geöffnet und miteinander zumindest teilweise überlappt werden können.

5. Vorrichtung nach Anspruch 1, bei der die Karussellstruktur aus einer Vielzahl von Tragarmen besteht, die eine Gruppe zum Tragen der Formen und zum Verteilen von Arbeitsgas an einem freien Ende aufweisen, **dadurch gekennzeichnet, daß** die Trag- und Verteilungsgruppe (88) mit Rotationsverteilern (19, 20; 17, 18) ausgestattet ist, die extern, d.h. von der Außenseite direkt her zugänglich angeordnet sind.

6. Vorrichtung nach Anspruch 1, bei der die Karussellstruktur aus einer Vielzahl von Tragarmen zum Tragen der Formen und zum Verteilen von Arbeitsgas an einem freien Ende besteht, **dadurch gekennzeichnet, daß** Verbindungseinrichtungen für die Abgabe von Arbeitsgas zwischen dem zentralen Teil der Vorrichtung und dem Träger und der Verteilungsgruppe (6) vorgesehen sind, wobei die Verbindungseinrichtungen aus einer oder mehreren Leitungen (5) bestehen, die extern in Bezug auf die End-Antriebswelle (7) der Gruppe (88) angeordnet sind.

## Revendications

1. Dispositif pour le moulage par carrousel de matériaux plastiques, consistant en une structure en tourniquet pour supporter des moules, dans laquelle les moules occupent un volume de rotation correspondant, ladite structure permettant aux moules de tourner autour d'un ou plusieurs axes et de se déplacer le long d'un chemin opératoire consistant en au moins une chambre de chauffage ou un four, délimité par des parois procurant une chambre de chauffage pour les moules, dispositif **caractérisé par le fait qu'**au moins deux desdites parois (6) délimitent le volume (99) occupé par les moules dans la chambre de chauffage (67).

2. Dispositif selon la revendication 1, **caractérisé par le fait que** lesdites parois (6) sont mobiles entre deux configurations qui peuvent être établies de manière stable, c'est-à-dire une position d'ouverture, dans laquelle les moules (9) peuvent être introduits dans la chambre de chauffage (H) ou retirés de celle-ci, et une position de fermeture, dans laquelle ils forment ladite chambre de chauffage (67), qui présente un volume analogue à celui dudit volume de rotation (99) mais légèrement plus grand que celui-ci.

3. Dispositif selon la revendication 1, **caractérisé par le fait que** lesdites parois mobiles (6) consistent en une pluralité de parties (66) articulées sur deux côtés opposés de ladite chambre (67).

4. Dispositif selon la revendication 3, **caractérisé par le fait que** lesdites parties articulées (66) sont reliées l'une à l'autre au moyen de charnières verticales (60), de sorte qu'elles peuvent être ouvertes et au moins se chevaucher partiellement l'une l'autre.

5. Dispositif selon la revendication 1, dans lequel ladite structure en tourniquet consiste en une pluralité de bras de support présentant un ensemble pour supporter les moules et pour distribuer un gaz de service à une extrémité libre, dispositif **caractérisé par le fait que** ledit ensemble (88) de support et de distribution est équipé de distributeurs rotatifs (19, 20 ; 17, 18) placés à l'extérieur, c'est-à-dire directement accessibles de l'extérieur.

6. Dispositif selon la revendication 1, selon lequel ladite structure à tourniquet consiste en une pluralité de bras de support supportant les moules et distribuant un gaz de service à une extrémité libre, dispositif **caractérisé par le fait que** des moyens de connexion pour la distribution du gaz de service sont prévus entre la partie centrale du dispositif et ledit ensemble (6) de support et de distribution, lesdits moyens de connexion consistant en une ou plusieurs conduites (5) disposées de manière externe par rapport à l'arbre entraîné final (7) dudit ensemble (88).
